# EUROPEAN PATENT SPECIFICATION

(11) **EP 0 319 194 B1**
(45) Date of publication and mention of the grant of the patent: **20.01.1993**
(21) Application number: 88311114.8
(22) Date of filing: 24.11.1988
(51) Int. Cl.: G02B 6/44

(54) **Method and apparatus for installing an optical fibre member**
Verfahren und Vorrichtung zur Installation eines faseroptischen Körpers
Méthode et dispositif pour l'installation d'un corps à fibre optique

(30) Priority: 25.11.1987 GB 8727579
(43) Date of publication of application: 07.06.1989
(73) Proprietor: BICC Public Limited Company, London W1X 5FH (GB); CORNING LIMITED, Sunderland SR4 6EJ (GB)
(72) Inventor: Tansey, John Alfred, Cheshire WA7 4JS (GB); Davey, Rodney John, Merseyside L35 OQD (GB)
(74) Representative: Boon, Graham Anthony

(56) References cited:
- EP-A- 0 108 590
- CA-A- 1 218 810
- GB-A- 2 152 621

## Description

This invention relates to a method and apparatus for installing an optical fibre member in a tubular passageway.

EP-A-108590 describes a method of installing at least one optical fibre member in a tubular passageway in which there is created a flow of air travelling in the desired direction of travel of the optical fibre member, the air flowing over the outer surface of the optical fibre member to exert a viscous drag force thereon to propel the optical fibre member forwardly. Methods are also known for installing an optical fibre member in a tubular passageway using a flow of air, from our two co-pending applications filed on even date herewith, under Nos. 88311112.2 and 88311113.0 and both entitled "Method and apparatus for blowing an optical fibre member". In the second of these co-pending applications, published as EP-A 318280, a venturi is used to create the necessary force on the optical fibre member, and in the other published as EP-A-323028, a pressurised container is provided at the upstream end of the passageway.

It will be observed that in all three of the methods just described the air flow is created by increasing the pressure at the upstream end of the passageway, leaving the downstream end at atmospheric pressure. In effect the air is blown into the passageway.

It has now been appreciated, however, that instead of increasing pressure at the upstream end of the passageway it may be advantageous to provide means at the downstream end which create a reduced pressure and therefore impart a sucking action. It is noted that GB-A-2152621 describes a method of installing an optical fibre member in a tubular passageway, in which a leading string for the fibre member has a pig attached to one end thereof and is sucked into the passageway by a pressure differential across the pig. The present invention provides a method of the type described in EP-A-108590 characterised in that the flow of air is created by air being sucked from the downstream end thereof, instead of the air being blown into the upstream end. The invention further provides an apparatus suitable for carrying out the aforementioned method.

In the accompanying drawings:
Figure 1 shows diagrammatically the operation of the present invention; and
Figure 2 shows a modification which can be incorporated in what is shown in Figure 1.

An optical fibre member 1 is unwound from a reel 2 thereof and introduced into a tubular passageway 3 along which it is to be routed. Instead of the reel 2 any other suitable means of supplying the optical fibre member could be used. The downstream end of the passageway 3 is connected via a short transparent tube 4 to a vacuum pump 5 or other source of reduced pressure. A filter 6 is located in the transparent tube 4, the filter being sufficiently porous not to impede substantially the flow of air therethrough, but being such as to prevent the leading end of the optical fibre member 1 entering the vacuum pump 5.

In use, the leading end of the optical fibre member 1 is introduced into the adjacent end of the tubular passageway 3 in such a way as to create a certain degree of slack in the optical fibre member in the portion being introduced, and suction is applied by means of the vacuum pump 5 to cause a current of air to pass through the tubular member 3 and the tube 4. This applies a drag force to the outer surface of the fibre member and causes it to travel towards the vacuum pump 5. When the leading end of the optical fibre member 1 reaches the transparent tube 4 its arrival can be observed by an operator who can then switch off the vacuum pump 5. The transparent tube 4 is removably connected to the tubular passageway 3, and by disconnecting the one from the other the leading end to the optical fibre member 1 can then be led away from the tubular passageway 3 for it to be connected to wherever it may be desired.

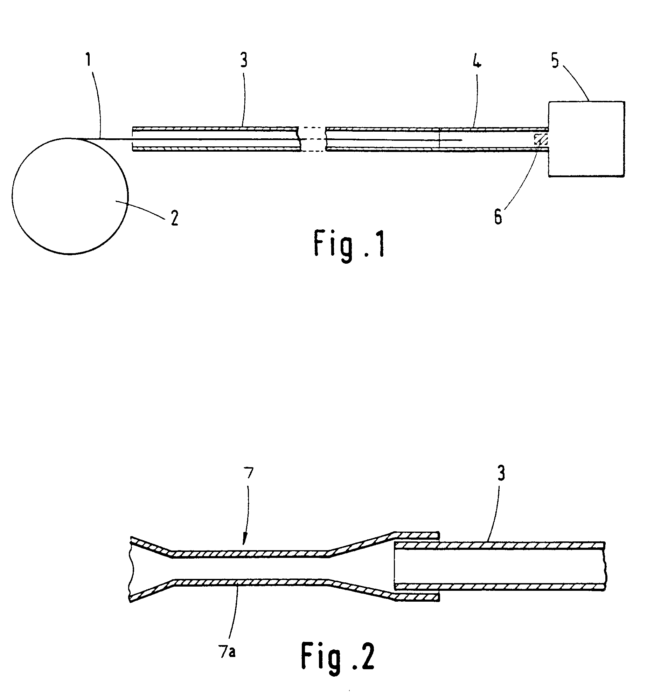

The degree of slack referred to above is continuously provided to the optical fibre member, not just when the leading end enters the tubular passageway 3. One way of achieving this slack is by use of a constriction tube 7 as shown in Figure 2. This provides an increased air flow velocity in the constricted portion 7a thereof which increases the drag force on the optical fibre member 1 passing thereof. A venturi, for example as described in our copending application referred to above, provides another way of achieving the required slack. Yet another way of achieving the required slack is to use mechanical means, for example a caterpillar tractor. The tractor can be located upstream of the upstream end of the passageway 3 and spaced therefrom by a chamber of the same diameter as the passageway. The tractor delivers the fibre member with slack into the chamber. The chamber gives support to the fibre member prior to its entry into the passageway. Air flows into and through the chamber on its way to the passageway, and this air flow provides a viscous drag force in the direction of travel assisting the member from the caterpillar tractor into the passageway.

Various modifications may be made to the arrangement just described. For example, if it is desired that a significant length of optical fibre member, say 20 metres, should protrude from the downstream end of the tubular passageway 3 to a fibre container can be interposed in the path of fibre travel somewhere on the downstream side of the tubular passageway for the purpose of taking up the desired length of fibre. Also, it will be appreciated that other means may be used for detecting the arrival of the leading end of the optical fibre member instead of the visual indication provided by the transparent tube.

The present invention is intended for use under circumstances where the flow of air provided by the vacuum pump 5 is, by itself, sufficient to impart the necessary force to the optical fibre member. For example, depending upon the nature of the tubular passageway and other relevant factors this may be the case where the optical fibre member is being fed from the top to the bottom of a substantially vertically orientated tubular passageway. One situation where such passageways are encountered is in installing optical fibre members to provide a communications system within a building. In this case optical fibre members may be run along vertical ducts which extend from the top to the bottom of the building. In applying the method of the present invention to such a situation what can be done is to take the reel 2 to the top of the building where the fibre member is introduced into the upper end of the duct, and connect the vacuum pump 5 to the lower end of the duct, typically on the ground floor or in a basement. This has the convenience of making the installation easier and quieter to carry out, since the bulkiest and noisiest component of the system, namely the vacuum pump, can be kept at or below ground level.

It should be noted that although the specific embodiment refers to installing a single optical fibre member 1, the invention can be used to install a plurality of such members either simultaneously or consecutively.

## Claims

1. A method of installing at least one optical fibre member (1) in a tubular passageway (3) in which there is created a flow of air travelling in the desired direction of travel of the optical fibre member (1), the air flowing over the outer surface of the optical fibre member to exert a viscous drag force thereon to propel the optical fibre member forwardly, characterised in that the flow of air is created by air being sucked from the downstream end of the tubular passageway (3).

2. A method as claimed in claim 1, wherein the tubular passageway (3) extends generally vertically, and the said direction of travel is downward.

3. An apparatus for installing at least one optical fibre member in a tubular passageway, comprising means for introducing the optical fibre member into a first end of the passageway and means (5) for creating a flow of air travelling from the said first end to the said second end, the air flowing over the outer surface of the optical fibre member to exert a viscous drag force thereon to propel the optical fibre member forwardly, characterised in that the air flow creating means (5) is a source of reduced pressure connected to the said second end of the passageway (3).

4. An apparatus as claimed in claim 3, wherein the source of reduced pressure (5) is a vacuum pump.

5. An apparatus as claimed in claim 3 or 4, comprising means (4) for detecting the arrival at the said second end of the passageway (3) of the leading end of the optical fibre member (1).

6. An apparatus as claimed in claim 5, wherein the detecting means (4) comprises a transparent tube connected to the said second end of the passageway (3).

7. An apparatus as claimed in any one of claims 3 to 6, comprising means (6) for preventing the leading end of the optical fibre member (1) entering the source of reduced pressure (5).

8. An apparatus as claimed in claim 7, wherein the said preventing means (6) is a plug which is permeable to air and is located upstream of the source of reduced pressure.

9. An apparatus as claimed in any one of claims 3 to 8, comprising means (7, 7a) at the said first end of the said passageway (3) for causing air entering the said first end to pass over the optical fibre member (1) at a greater velocity before the member enters the said passageway (3) than after the member enters the said passageway.

10. An apparatus as claimed in claim 9, wherein the said means (7, 7a) at the said first end comprises a flow constricting member.

11. An apparatus as claimed in any one of claims 3 to 8, comprising mechanical means for introducing the optical fibre member (1) with slack into the said first end of the said passageway (3).

## Patentansprüche

1. Ein Verfahren zur Installation eines faseroptischen Körpers (1) in einem rohrförmigen Durchlaß (3), in dem ein Luftstrom erzeugt wird, der in der gewünschten Bewegungsrichtung des faseroptischen Körpers (1) fließt, wobei die über die Außenfläche des faseroptischen Körpers fließende Luft eine viskose Schleppkraft auf dieser Fläche erzeugt, um den faseroptischen Körper vorwärts zu bewegen,
**dadurch gekennzeichnet**, **daß** der Luftstrom durch Luft erzeugt wird, die am unteren Ende des rohrförmigen Durchlasses angesaugt wird,

2. Ein Verfahren nach Anspruch 1,
**dadurch gekennzeichnet**, **daß** sich der rohrförmige Durchlaß (3) weitgehend vertikal erstreckt und die Bewegungsrichtung nach unten verläuft.

3. Eine Vorrichtung zur Installation mindestens eines faseroptischen Körpers in einem rohrförmigen Durchlaß mit Mitteln für die Einführung des faseroptischen Körpers in ein erstes Ende des Durchlasses, und mit Mitteln (5) für die Erzeugung eines Luftstromes, der von einem ersten Ende zu einem zweiten Ende fließt, wobei die über die Außenfläche des faseroptischen Körpers fliessende Luft auf dieser Fläche eine viskose Schleppkraft ausübt, um den faseroptischen Körper nach vorne zu bewegen,
**dadurch gekennzeichnet**, **daß** die Mittel (5) für die Erzeugung des Luftstromes aus einer Niederdruckquelle bestehen, die an das zweite Ende des Durchlasses (3) angeschlossen ist.

4. Eine Vorrichtung nach Anspruch 3,
**dadurch gekennzeichnet**, **daß** die Niederdruckquelle (5) eine Vakuumpumpe ist.

5. Ein Vorrichtung nach einem der Ansprüche 3 oder 4,
**dadurch gekennzeichnet**, **daß** Mittel (4) vorgesehen sind, um festzustellen, wann die Vorderkante des faseroptischen Körpers (1) das zweite Ende des Durchlasses (3) erreicht.

6. Eine Vorrichtung nach Anspruch 5,
**dadurch gekennzeichnet**, **daß** die Festellungsmittel (4) ein transparentes Rohr aufweisen, das an das zweite Ende des Durchlasses (3) angeschlossen ist.

7. Eine Vorrichtung nach einem der Ansprüche 3 bis 6,
**dadurch gekennzeichnet**, **daß** Mittel (6) vorgesehen sind, um die Vorderkante des faseroptischn Körpers (1) daran zu hindern, in die Niederdruckquelle (5) einzudringen.

8. Eine Vorrichtung nach Anspruch 7,
**dadurch gekennzeichnet**, **daß** die Verhinderungsmittel (6) aus einem Absperrglied bestehen, das luftdurchlässig und oberhalb der Niederdruckquelle angeordnet ist.

9. Eine Vorrichtung nach einem der Ansprüche 3 bis 8,
**dadurch gekennzeichnet**, **daß** an dem ersten Ende des Durchlasses (3) Mittel (6, 6a) vorgesehen sind, um die in das erste Ende eindringende Luft zu veranlassen, mit größerer Geschwindigkeit über den faseroptischer Körper (1) zu fließen, bevor der faseroptische Körper in den Durchlaß (3) eintritt als nachdem dieser faseroptische Körper in den Durchlaß eingetreten ist.

10. Eine Vorrichtung nach Anspruch 9,
**dadurch gekennzeichnet**, **daß** die an dem ersten Ende vorgesehenen Mittel (6, 6a) eine Durchflußdrossel aufweisen.

11. Eine Vorrichtung nach einem der Ansprüche 3 bis 8,
**dadurch gekennzeichnet**, **daß** mechanische Mittel vorgesehen sind, um den faseroptischer Körper (1) mit Spiel in das erste Ende des Durchlasses (3) einzuführen.

## Revendications

1. Un procédé d'installation d'au moins un élément (1) de fibre optique dans un passage tubulaire (3) dans lequel il est créé un écoulement d'air se déplaçant dans la direction souhaitée de déplacement de l'élément (1) de fibre optique, l'air s'écoulant au-dessus de la surface extérieure de l'élément de fibre optique afin d'exercer sur celui-ci une force de traction visqueuse pour propulser vers l'avant l'élément de fibre optique, caractérisé en ce que l'écoulement d'air est créé par une aspiration d'air à partir de l'extrémité aval du passage tubulaire (3).

2. Un procédé selon la revendication 1, dans lequel le passage tubulaire (3) s'étend généralement à la verticale, et ladite direction de déplacement est descendante.

3. Un appareil destiné à installer au moins un élément à fibre optique dans un passage tubulaire comprenant un moyen pour introduire l'élément de fibre optique dans une première extrémité du passage et un moyen (5) pour créer un écoulement d'air se déplaçant depuis ladite première extrémité vers ladite deuxième extrémité, l'air s'écoulant au-dessus de la surface extérieure de l'élément à fibre optique afin d'exercer sur celui-ci une force de traction visqueuse pour propulser vers l'avant l'élément à fibre optique, caractérisé en ce que le moyen (5) créant l'écoulement d'air est une source de pression réduite reliée à ladite deuxième extrémité du passage (3).

4. Un appareil selon la revendication 3, dans lequel la source de pression réduite (5) est une pompe à vide.

5. Un appareil selon la revendication 3 ou 4, comprenant un moyen (4) de détection de l'arrivée de l'extrémité avant de l'élément (1) de fibre optique à ladite deuxième extrémité du passage (3).

6. Un appareil selon la revendication 5, dans lequel le moyen de détection comprend un tube transparent relié à ladite deuxième extrémité du passage (3).

7. Un appareil selon l'une quelconque des revendications 3 à 6, comprenant un moyen (6) pour empêcher l'extrémité avant de l'élément (1) de fibre optique d'entrer dans la source de pression réduite (5).

8. Un appareil selon la revendication 7, dans lequel ledit moyen d'empêchement (6) est un bouchon qui est perméable à l'air et qui est situé en amont de la source de pression réduite.

9. Un appareil selon l'une quelconque des revendications 3 à 8, comprenant à ladite première extrémité dudit passage (3) un moyen (6, 6a) prévu pour amener l'air qui entre à ladite première extrémité à passer au-dessus de l'élément (1) de fibre optique à une vitesse plus grande avant l'entrée de l'élément dans ledit passage (3) qu'après l'entrée de l'élément dans ledit passage.

10. Un appareil selon la revendication 9 dans lequel ledit moyen (6, 6a) à ladite première extrémité comprend un élément de rétrécissement d'écoulement.

11. Un appareil selon l'une quelconque des revendications 3 à 8, comprenant un moyen mécanique prévu pour introduire avec relâchement l'élément (1) de fibre optique dans ladite première extrémité dudit passage (3).
